# EUROPÄISCHE PATENTANMELDUNG

(11) **EP 2 515 264 A1**
(43) Veröffentlichungstag der Anmeldung: **24.10.2012**
(21) Anmeldenummer: 12161087.7
(22) Anmeldetag: 23.03.2012
(51) Int. Cl.: G06Q 10/00, G06Q 10/02

(54) **Verfahren und System zum Simulieren der zeitlichen Entwicklung von Buchungszuständen**

(30) Priorität: 20.04.2011 DE 102011007822
(71) Anmelder: Deutsche Lufthansa AG, 60546 Frankfurt (DE)
(72) Erfinder: Schröder, Tobias, 63450 Hanau (DE); Cleophas, Catherine, 14195 Berlin (DE); Frank, Michael, 60528 Frankfurt (DE); Friedemann, Martin, 60486 Frankfurt (DE)
(74) Vertreter: WSL Patentanwälte Partnerschaftsgesellschaft

(57) **Zusammenfassung**

Die vorliegende Erfindung betrifft ein Verfahren zum Simulieren der zeitlichen Entwicklung von Buchungszuständen für Flüge. Um ein Verfahren und ein System zur Simulation von Buchungszuständen für Flüge zu schaffen, welches zu erwartende, reale Buchungszustände möglichst gut widerspiegelt und dem Nutzer einen größeren Spielraum für interaktive Änderungen von Parametern lässt, um auf diese Weise reale Buchungszustände und den zeitlichen Verlauf dieser Buchungszustände realistischer wiederzugeben, den dadurch theoretisch erzielten Gewinn zu berechnen und damit auch einen besseren Lerneffekt bei dem betreffenden Revenue Manager zu erzielen, wird erfindungsgemäß vorgeschlagen, dass eine erste Anzahl harter Parameter, die mindestens einen Flugplan zwischen mindestens zwei Abflug- bzw. Zielorten umfassen, und eine zweite Anzahl weicher Parameter, die mindestens einen Preis für einen Flug zwischen den mindestens zwei Abflug- und Zielorten umfassen, vorgesehen sind, sowie eine virtuelle Umgebung, die ein Abbild oder Modell einer realen Umgebung darstellt und in welcher virtuelle Passagiere Flüge zu den jeweils durch die Parameter vorgegebenen Bedingungen buchen, wobei der zeitliche Verlauf der Gesamtheit aller Buchungen erfasst wird und auf einer Anzeigeeinrichtung darstellbar ist und wobei ein Benutzer die jeweiligen Buchungszustände durch vorherige Einstellung mindestens eines der weichen Parametern beeinflusst, und wobei der aufgrund des jeweils aktuellen Buchungszustandes für einen Flug bzw. der Gesamtheit der Flüge zu erwartende Gewinn berechnet und ausgegeben wird, wobei mindestens zwei räumlich getrennte Benutzeroberflächen vorgesehen sind , die unabhängig voneinander Abfragen und Eingaben durch mindestens zwei verschiedene Nutzer erlauben

## Beschreibung

Die vorliegende Erfindung betrifft ein Verfahren und ein System zum Simulieren der zeitlichen Entwicklung von Buchungszuständen für Flüge.

Fluggesellschaften haben im Allgemeinen weltweit vernetzte Systeme und Verfahren zum Buchen von Flügen zwischen allen Orten, die von der jeweiligen Fluggesellschaft und/oder Partnergesellschaften angeflogen werden. Die entsprechenden Flugpläne sind dabei dem aufgrund von Erfahrungen erwarteten Bedarf angepasst, wobei auch Angebote anderer Fluggesellschaften zu berücksichtigen sind, die teilweise die gleichen Flugstrecken bedienen. Weiterhin wird die Flugzeugflotte einer Fluggesellschaft möglichst so eingesetzt, dass eine möglichst große Auslastung gewährleistet ist, der Bedarf möglichst vollständig gedeckt wird und gleichzeitig auch noch ein akzeptabler Gewinn erzielt wird.

Die vorgenannten und weitere Parameter beeinflussen sich jedoch gegenseitig. Wird das Angebot an Flügen zwischen einzelnen Strecken deutlich erhöht, so sinkt die Auslastung und zur Erhöhung der Auslastung müssen dann unter Umständen die Preise gesenkt werden. Gleichzeitig ist die Auslastung auch starken Schwankungen ausgesetzt, die beispielsweise durch die Jahreszeit, das Wetter, aktuelle politische Ereignisse und die allgemeine und lokale wirtschaftliche Situation bedingt sind.

Dabei kann es während eines Buchungszeitraums, der z. B. ein vollständiges Jahr vor dem jeweiligen Abflugtermin betragen kann, durchaus sinnvoll sein, in bestimmten Zeitfenstern unterschiedliche Preise vorzusehen, die Buchungsklassen zu variieren, z. B. die Anzahl der Plätze in der ersten, der Business- und der Economy-Klasse zu variieren, soweit das betreffende Flugzeugmodell diese Variationen erlaubt, und auch die Preise innerhalb der einzelnen Buchungsklassen unterschiedlich zu variieren, um im Ergebnis nicht unbedingt eine 100%-ige Auslastung, wohl aber einen maximalen Gewinn zu erzielen. Dabei können beispielsweise bei mangelnder Auslastung kurz vor dem Flugdatum die Preise nochmals gesenkt werden, um die Auslastung und auch den Gewinn zu verbessern, selbst wenn der für zusätzliche Buchungen erzielte Preis als Durchschnittspreis nicht kostendeckend wäre.

Die Anpassung entsprechender Buchungsparameter ist im Allgemeinen sogenannten "Revenue-Managern" vorbehalten. Diese versuchen durch Einstellung und Änderung der Parameter zu Beginn und während eines Buchungszeitraumes den Gewinn für ihre Fluggesellschaft jeweils zu optimieren.

Inwieweit derartige Optimierungsversuche erfolgreich sind, zeigt sich aber erst nach Abschluss eines jeweiligen Buchungszeitraumes. Verbesserungen und Lerneffekte auf Seiten der Revenue Manager sind daher nur auf einer zeitlich sehr gestreckten Basis zu erzielen.

Um entsprechende Lerneffekte der Revenue-Manager zu beschleunigen, sind bereits sogenannte "Revenue-Management-Simulatoren" bekannt. Diese bekannten Simulatoren haben sich jedoch bisher als relativ unzureichend und ineffektiv erwiesen.

Gegenüber diesem Stand der Technik liegt der vorliegenden Erfindung die Aufgabe zugrunde, ein Verfahren und ein System zur Simulation von Buchungszuständen für Flüge zu schaffen, welches zu erwartende, reale Buchungszustände möglichst gut widerspiegelt und dem Nutzer einen größeren Spielraum für interaktive Änderungen von Parametern lässt, um auf diese Weise reale Buchungszustände und den zeitlichen Verlauf dieser Buchungszustände realistischer wiederzugeben, den dadurch theoretisch erzielten Gewinn zu berechnen und damit auch einen besseren Lerneffekt bei dem betreffenden Revenue Manager zu erzielen.

Diese Aufgabe wird durch ein Verfahren bzw. ein System gemäß den Ansprüchen 1 bzw. 10 gelöst.
Gemäß der Erfindung werden für die Durchführung des Verfahrens eine erste Anzahl harter Parameter, die mindestens einen Flugplan zwischen mindestens zwei Orten, die jeweils Abflug- oder Zielort sein können, umfassen, und eine zweite Anzahl weicher Parameter bereitgestellt, die mindestens einen Preis für einen Flug zwischen den mindestens zwei Abflug- und Zielorten umfassen.

In diesem Zusammenhang wurde der Begriff "harte Parameter" in erster Linie für solche Parameter gewählt, die nicht ohne Weiteres veränderbar sind oder möglicherweise nur durch einen Administrator geändert werden können, während die "weichen Parameter" für Änderungen durch den Nutzer während der Simulation eines Buchungszeitraumes vorgesehen sind. Es versteht sich, dass die Einteilung in "harte" und "weiche" Parameter nicht starr sein muss, sondern gegebenenfalls auch variiert werden kann.

Gemäß dem Verfahren der vorliegenden Erfindung wird weiterhin eine virtuelle Umgebung bereitgestellt, die ein Abbild oder Modell einer realen Umgebung ist und in welcher virtuelle Passagiere Flüge zu den jeweils durch die Parameter vorgegebenen Bedingungen buchen wobei der zeitliche Verlauf der Gesamtheit aller Buchungen erfasst wird und auf einer Anzeigeeinrichtung darstellbar ist und wobei ein Benutzer die jeweiligen Buchungszustände durch vorherige Einstellung mindestens eines der weichen Parameter beeinflusst, und wobei der aufgrund des jeweils aktuellen Buchungszustandes für einen Flug bzw. der Gesamtheit der Flüge zu erwartende Gewinn berechnet und ausgegeben wird und wobei mindestens zwei räumlich getrennte Benutzeroberflächen vorgesehen sind, die unabhängig voneinander Abfragen und Eingaben durch mindestens zwei verschiedene Nutzer erlauben

Das virtuelle Modell (bzw. das Modell der virtuellen Umgebung) kann insbesondere auf konkreten Erfahrungen beruhen und einen konkreten historischen Verlauf eines Buchungszustandes oder mehrerer Buchungszustände umfassen.

Es ist beispielsweise auch möglich, eine konkrete virtuelle Umgebung durch Interpolation zwischen bekannten realen Umgebungen darzustellen. Beispielsweise kann für eine gegebene Strecke in einem gegebenen Zeitraum bei einem gegebenen Parametersatz ein bestimmter Ablauf der Buchungszustände registriert worden sein, während für einen vergleichbaren Zeitraum, jedoch mit einem anderen Parametersatz, beispielsweise einem anderen Flugpreis, ein anderer Verlauf des Buchungszustandes registriert worden ist. Durch Vergleich der beiden Buchungszustände und entsprechende Interpolation kann man annehmen, dass bei einem Parametersatz, der "zwischen" den beiden genannten Sätzen von Parametern liegt, auch ein Buchungszustand erreicht wird, der zwischen den Buchungszuständen des ersten und zweiten Parametersatzes liegt.

Dadurch, dass mindestens zwei räumlich getrennte Benutzeroberflächen vorgesehen sind, die unabhängig voneinander Abfragen und Eingaben durch mindestens zwei verschiedene Nutzer erlauben, wird die virtuell durchlaufene Buchungsperiode noch realistischer und prinzipiell auch weniger vorhersehbar als dies bei einer allein durch ein Programm erzeugten Simulation zu erwarten wäre. Insbesondere wird dadurch auch die Tatsache wiedergespiegelt, dass auch jeweils andere Fluggesellschaften auf demselben Markt, d. h. für dieselben Strecken, konkurrieren. Dennoch sind die verschiedenen Benutzer des Systems und des Verfahrens im Allgemeinen Revenue-Manager derselben Fluggesellschaft, nehmen jedoch in dem System die Rolle eines Konkurrenten der virtuellen Fluggesellschaft des bzw. der jeweils anderen Benutzers ein,

Dennoch kann das System auf nur einem PC oder Server installiert sein,wobei der PC oder der Server Verbindung zu mehreren voneinander getrennten Benutzeroberflächen hat.
Zweckmäßigerweise hat das System und das Verfahren auch einen Speicher, in welchem die jeweiligen Buchungszustände zusammen mit zugehörigen (virtuellen) Zeitpunkten abgelegt sind, so dass eine konkrete Simulation nicht nur im Nachhinein in allen ihren Abläufen dokumentiert werden kann, sondern auch jederzeit unterbrochen und zu einem anderen Zeitpunkt fortgesetzt werden kann, um auch insoweit eine Alltagssituation realistischer nachzuvollziehen.

Darüber hinaus ist es gemäß einer Ausführungsform der Erfindung zweckmäßig, die auf Basis von Erfahrungswerten oder Interpolation oder Extrapolation derselben ermittelten Modelle zusätzlich noch stochastisch zu variieren, weil die Nutzer ansonsten allzu leicht die jeweiligen Reaktionen der virtuellen Umgebung auf Parameteränderungen vorhersehen könnte und der Lerneffekt und vor allem die gewünschte Flexibilität des Revenue Managers nur unzureichend gefordert wären.

Dieses System kann selbstverständlich auf Basis weiterer konkreter Erfahrungen und der Registrierung von Parametern und Buchungszuständen in der Realität angepasst und verfeinert werden. Im Ergebnis ist es dadurch möglich, ein relativ gutes Abbild bzw. ein Modell einer realen Umgebung zu erzeugen, in der sich virtuelle Passagiere und virtuelle Konkurrenten ähnlich verhalten wie in der Realität, wobei das so simulierte System gegenüber einem realen System lediglich im Zeitraffer abläuft, so dass beispielsweise innerhalb von Sekunden oder Minuten, ggf. unterbrochen durch Pausen zur Eingabe von Parametern, oder auch um zwischenzeitlich mehrere Stunden oder Tage vergehen zu lassen, der gesamte Buchungszeitraum eines Jahres simuliert werden kann.

Dabei werden gemäß dem erfindungsgemäßen Verfahren der zeitliche Verlauf und die Gesamtheit aller Buchungen erfasst und beispielsweise bei Bedarf auf einer Anzeigeeinrichtung wiedergegeben, wobei die Benutzer des Verfahrens die jeweiligen Buchungszustände durch Änderung mindestens eines der weichen Parameter beeinflussen können. Daraufhin wird der für einen konkreten Flug bzw. eine Gruppe oder die Gesamtheit von Flügen zu erwartende Gewinn berechnet und ausgegeben, wobei auch die entsprechenden Gestehungskosten berücksichtigt werden können, insbesondere dann, wenn der Benutzer auch Parameter verändert oder verändern kann, die hierauf Einfluss haben, wie zum Beispiel im Falle des Wechsels eines Flugzeugtyps. Je nach dem für einen konkreten Flug erreichten Buchungszustand wird also ein entsprechender Gewinn berechnet bzw. ausgegeben. Der Benutzer hat auf diese Weise eine unmittelbare Erfolgskontrolle für die von ihm getroffenen Maßnahmen bzw. Parameteränderungen.

Dabei umfassen die weichen, vom Benutzer während eines Modulationslaufs ggf. veränderbaren Parameter, neben dem bereits erwähnten Flugpreis mindestens eines der folgenden: die Anzahl und Art der Buchungsklassen, unterschiedliche Preise und/oder Sitzzahlen für unterschiedliche Buchungsklassen, und Zeitfenster für bestimmte Preise für die unterschiedlichen Buchungsklassen. Der Nutzer kann also konkret die Sitzzahlen für Business- und Economy-Class je nach Buchungszustand und seinen Erwartungen variieren und er kann auch andere Parameter, insbesondere den Preis für die Buchung eines Fluges der jeweiligen Klasse variieren, wobei er in aller Regel versuchen wird, insgesamt den bestmöglichen Gewinn zu erzielen.

Eventuell kann der Benutzer auch die Möglichkeit erhalten, den ein oder anderen der harten Parameter zu verändern, beispielsweise für einen Flug einen bestimmten Flugzeugtyp zu wählen, der standardmäßig nicht für den betreffenden Flug vorgesehen ist. Dabei muss das Verfahren dann allerdings berücksichtigen, dass dadurch auch eine weitere Verwendung des betreffenden Flugzeugs am Zielort zwingend vorgegeben ist und dass kein Konflikt mit Folgeflügen heraufbeschworen wird. All dies kann das System automatisch berücksichtigen, wobei weitergehende Änderungen, wie z. B. komplette Flugplanänderungen, Streichung bestimmter Flüge oder Hinzufügung von Flügen nur ausnahmsweise einem Nutzer zugestanden werden sollten, in der Regel jedoch allenfalls von einem Administrator vorgenommen werden, so dass der Nutzer von den harten Parametern als gegeben ausgehen muss.

Diese harten Parameter umfassen neben dem bereits erwähnten mindestens einen Flugplan mindestens eines der folgenden: Flugzeuge und Flugzeugdaten, die Menge der anfragenden Kunden, Zeitfenster, die Anzahl von anfragenden Kunden pro Zeitfenster und/oder pro Buchungsklasse und die Präferenzen der Kunden.

Parameter können aufgrund von festen Plänen und Erfahrungsdaten von einem Administrator vorgegeben werden, verändern sich aber auch interaktiv, d. h. durch die Aktionen anderer Benutzer, die zu mehr oder weniger Buchungen bei anderen Fluggesellschaften führen. Dabei sollte das Verfahren dafür ausgelegt sein, einen Zeitraum zu simulieren, der mindestens einen Buchungszeitraum zwischen einer Woche und einem Jahr vor dem Flug simuliert, wobei die Simulation sich vorzugsweise aber auch auf den Zeitraum bis wenige Stunden vor Abflug erstrecken kann.

Während der Simulation eines solchen Zeitraums sind definierte Zeitpunkte für die Eingabe von Parameteränderungen vorgesehen. Diese Zeitpunkte entsprechen virtuellen Zeitpunkten in dem simulierten Buchungszeitraum, wobei die Abstände zwischen den Zeitpunkten zu Beginn des Simulationszeitraums deutlich größer sein können, also beispielsweise in Monaten gemessene Abstände sein können, als gegen Ende des Simulationszeitraums, d.h. während der letzten vier oder zwei Wochen vor dem Flug, wo möglicherweise eine tägliche oder stündliche Möglichkeit zur Änderung der Parameter angeboten werden kann.

Weiterhin ist es möglich, "Interrupts" bzw. Unterbrechungen zur Eingabe von Parameteränderungen auch in Abhängigkeit von konkret erreichten Buchungszuständen vorzusehen.

Weiterhin können den verschiedenen Benutzern auch unterschiedliche Kompetenzen zur Änderung von Parametern sowie unterschiedliche Parameterbereiche vorgegeben werden, innerhalb derer sich die Aktionen bewegen können. Dies spiegelt die Tatsache wieder, dass Konkurrenten unterschiedliche Systeme für ihr Revenue-Management benutzen und dass unterschiedliche Fluggesellschaften ihre Flugzeuge teilweise unterschiedlich ausgestattet haben und beispielsweise die Änderung der Zahl von Plätzen in bestimmten Buchungsklassen nicht immer in dem gleichen Ma-βe möglich ist oder zugelassen wird.

Erfindungsgemäß ist vorgesehen, dass mindestens ein Teil der Parameter von dem Nutzer über ein Terminal oder eine Eingabeeinrichtung an einem PC vorgesehen ist. Eine solche Eingabeeinrichtung kann beispielsweise eine Tastatur oder aber auch eine Maus sein, die bestimmte Parameterwerte aus einem Menü auswählt. Dabei kann aber ein gegebener PC gleichzietig mit mehreren Eingabeeinrichtungen für verschiedene Benutzer ausgestattet bzw. über ein Netzwerk auch für mehrere Benutzer (gleichzeitig) zugänglich sein.

Wie bereits erwähnt, ist unter Umständen ein Teil der Parameter nur von einem Administrator variierbar. Ein weiterer Teil der verwendeten Parameter wird entweder vom Nutzer oder vom Administrator allein auf Basis fest vorgegebener äußerer Umstände eingegeben.

Ein weiterer Teil der Parameter, die insbesondere und z. B. die Anzahl von während eines bestimmten Zeitfensters eines Buchungszeitraums anfragenden Passagiere, kann durch stochastische Variationen verändert werden. Auch hier kann man selbstverständlich von konkreten Erfahrungswerten ausgehen.

Das erfindungsgemäße System weist entsprechende Einrichtungen auf, die zur Durchführung des Verfahrens erforderlich sind. Beispielsweise benötigt das System einen Rechner oder PC und mindestens einen Speicher, in welchem die harten und weichen Parameter gespeichert werden können. Außerdem umfasst das System ein entsprechendes Programm, welches die virtuelle Umgebung erzeugt und für den Benutzer eine interaktive Benutzeroberfläche bereitstellt, über welche er die Parameter eingeben und ändern kann. Auch der zeitliche Verlauf der Gesamtheit der Buchungen muss in entsprechenden Speichern gespeichert und ggf. auf einer Anzeigeeinrichtung wiedergegeben werden können. Schließlich muss das System auch Einrichtungen zur Berechnung des Gewinns und der jeweils aktuellen Buchungszustände aufweisen.

In der bevorzugten Ausführungsform wird das System realisiert in Form eines auf einem PC implementierten Programms, wobei Tastatur, Maus und/oder berührungsempfindlicher Bildschirm Eingabeeinrichtungen darstellen und das Programm auf einem Bildschirm eine entsprechende Benutzeroberfläche anbietet, anhand welcher ein Benutzer die eingegebenen und/oder vorgegebenen Parameter kontrollieren kann und über welche schließlich auch die Ergebnisse bzw. zwischenzeitliche Buchungszustände bzw. erwartete Gewinne und wahlweise auch Gestehungskosten dargestellt werden können. Das System kann ggf. auch selbst Vorschläge für Parameteränderungen anbieten, an welchen sich der Benutzer orientieren kann oder von denen er ggf. auch abweichen kann.

Weitere Vorteile, Merkmale und Anwendungsmöglichkeiten der vorliegenden Erfindung werden deutlich anhand der folgenden Beschreibung einer bevorzugten Ausführungsform.

### Ausführungsbeispiel:

Das Verfahren kann beispielsweise in Form eines Programms auf dem PC eines Nutzers, insbesondere eines Revenue-Managers implementiert sein.

Der Simulator berechnet initiale Prognosen und initiale Angebotspreise für jede beteiligte Fluggesellschaft. Diese kann sich der Nutzer ansehen und verändern, indem er z.B. einzelne Buchungsklassen (die Preispunkten entsprechen) für den Verkauf öffnet oder schließt. Der Revenue-Manager gibt dabei über eine Tastatur oder eine andere Eingabeeinrichtung für eine Vielzahl unterschiedlicher Flüge in einem gegebenen Buchungszeitraum jeweils einen oder mehrere Parameter ein, die insbesondere die Art und Anzahl der Buchungsklassen, die Zahl der Sitze in den jeweiligen Buchungsklassen und die Preise für unterschiedliche Buchungsklassen umfassen.

Nach Abschluss dieser Aktion lässt der Simulator die anfragenden Kunden anhand ihrer Präferenzfunktion aus den angebotenen Buchungsklassen auswählen. Die Buchungs-Informationen werden in die simulierten Revenue-Management-Systemen der entsprechenden Fluggesellschaft eingefüttert, wo sie zur Neuprognose und Neuoptimierung verwendet werden

Das System bzw. Verfahren simuliert einen gewissen Zeitraum und verwendet dabei durch Zufallseinflüsse variierte Erfahrungswerte hinsichtlich Zahl der anfragenden und buchenden Kunden. Es zeigt den aktuellen Buchungszustand für einen oder eine Mehrzahl ausgewählter Flüge an, rechnet den bei dem aktuellen Buchungszustand erwarteten Gewinn aus und rechnet ggf. auch noch den erwarteten Gewinn aus, den man auf Basis der aktuellen Parameter unter Fortschreibung eines aktuellen Buchungsverhaltens voraussichtlich bis zum Abflugtermin noch erzielen würde.

Der Simulator kann dabei insbesondere auch Eingaben mehrerer Benutzer unabhängig voneinander aufnehmen, die dann alle gemeinsam zur Erstellung von Prognosen und Optimierungsvorschlägen beitragen.

Sobald wieder ein Eingabezeitpunkt erreicht ist, können sich die Benutzer graphisch die bislang erreichten Ergebnisse anhand verschiedener Kennzahlen (Ertrag, Buchungslage, Verfügbarkeit von Buchungsklassen) ansehen und ihre Einstellungen modifizieren

Der (bzw. die) Revenue-Manager kann (können) sich dann entscheiden, ob er (sie) irgendwelche Parameter, beispielsweise die Sitzzahl in einer bzw. zwei Buchungsklassen, verändern und/oder ein gewisses Kontingent von Plätzen zu einem günstigeren und/oder einem höheren Preis anbieten will (bzw. wollen). Die Simulation wird dann fortgesetzt bis zum nächsten Eingabezeitpunkt, der näher an dem Abflugtermin liegt, wobei sich Eingabepunkte, Neuberechnungen und Anzeigen bis zu einem kurz vor dem Abflugzeitpunkt liegenden Zeitraum erstrecken.

In einer bevorzugten Ausführungsform der Erfindung geschieht dies insbesondere parallel für eine Vielzahl von Flügen, die allesamt von ein und demselben Revenue-Manager verwaltet werden, um die Simulationsbedingungen möglichst realistisch zu gestalten. Durch intensives Training mit einem solchen Simulationssystem kann der Nutzer bzw. Revenue-Manager Erfahrungen gewinnen, die im Ergebnis zu Parameteränderungen führen, welche dem jeweiligen Unternehmen letztlich einen maximalen bzw. optimierten Gewinn garantieren.

## Patentansprüche

1. Verfahren zum Simulieren der zeitlichen Entwicklung von Buchungszuständen für Flüge mit einer ersten Anzahl harter Parameter, die mindestens einen Flugplan zwischen mindestens zwei Abflug- bzw. Zielorten umfassen, und einer zweiten Anzahl weicher Parameter, die mindestens einen Preis für einen Flug zwischen den mindestens zwei Abflug- und Zielorten umfassen, sowie mit einer virtuellen Umgebung, die ein Abbild oder Modell einer realen Umgebung darstellt und in welcher virtuelle Passagiere Flüge zu den jeweils durch die Parameter vorgegebenen Bedingungen buchen, wobei der zeitliche Verlauf der Gesamtheit aller Buchungen erfasst wird und auf einer Anzeigeeinrichtung darstellbar ist und wobei ein Benutzer die jeweiligen Buchungszustände durch vorherige Einstellung mindestens eines der weichen Parametern beeinflusst, und wobei der aufgrund des jeweils aktuellen Buchungszustandes für einen Flug bzw. der Gesamtheit der Flüge zu erwartende Gewinn berechnet und ausgegeben wird, wobei mindestens zwei räumlich getrennte Benutzeroberflächen vorgesehen sind , die unabhängig voneinander Abfragen und Eingaben durch mindestens zwei verschiedene Nutzer erlauben

2. Verfahren nach Anspruch 1, **dadurch gekennzeichnet, dass** die Benutzer mindestens zwei verschiedene Fluggesellschaften repräsentieren.

3. Verfahren nach Anspruch 2, **dadurch gekennzeichnet, dass** jeder der Benutzer eine andere Fluggesellschaft repräsentiert.

4. Verfahren nach Anspruch 1, **dadurch gekennzeichnet, dass** die weichen Parameter neben mindestens einem Flugpreis mindestens eines der folgenden umfassen:
Anzahl und Art der Buchungsklassen, unterschiedliche Preise für unterschiedliche Buchungsklassen, Zeitfenster für bestimmte Preise, Sitzzahlen für unterschiedliche Buchungsklassen.

5. Verfahren nach einem der vorstehenden Ansprüche, **dadurch gekennzeichnet, dass** die harten Parameter neben dem mindestens einen Flugplan mindestens eines der folgenden umfassen:
Flugzeuge und Flugzeugdaten, die Menge der anfragenden Kunden, Zeitfenster, Anzahl von Anfragen und Kunden pro Zeitfenster, Präferenzen der Kunden.

6. Verfahren nach einem der vorstehenden Ansprüche, **dadurch gekennzeichnet, dass** es mindestens einen Zeitraum zwischen einer Woche und einem Jahren im Zeitraffer simuliert.

7. Verfahren nach einem der vorstehenden Ansprüche, **dadurch gekennzeichnet, dass** während der Simulation eines Zeitraums definierte Zeitpunkte für die Eingabe von Parameteränderungen vorgesehen sind.

8. Verfahren nach einem der vorstehenden Ansprüche, **dadurch gekennzeichnet, dass** mindestens ein Teil der Parameter von einem Nutzer über Eingaben an einem Terminal oder PC variierbar ist.

9. Verfahren nach einem der vorstehenden Ansprüche, **dadurch gekennzeichnet, dass** ein Teil der Parameter nur von einem Administrator variierbar ist.

10. Verfahren nach einem der vorstehenden Ansprüche, **dadurch gekennzeichnet, dass** ein Teil der verwendeten Parameter auf Basis äußerer Umstände angegeben wird.

11. Verfahren nach einem der vorstehenden Ansprüche, **dadurch gekennzeichnet, dass** mindestens ein Teil der Parameter durch stochastische Variationen verändert wird.

12. Verfahren nach einem der vorstehenden Ansprüche, **dadurch gekennzeichnet, dass** verschiedenen Benutzern unterschiedliche Kompetenzen zur Änderung von Parametern und/oder unterschiedliche Parameterbereiche vorgegeben werden, innerhalb derer sich die Aktionen bewegen können

13. System zum Simulieren der zeitlichen Entwicklung von Buchungszuständen für Flüge mit einer Eingabe und Speichereinrichtung für eine erste Anzahl harter Parameter, wobei die harten Parameter mindestens einen Flugplan zwischen mindestens zwei Abflug- bzw. Zielorten umfassen, und einem Speicher sowie einer Eingabeeinrichtung für eine zweite Anzahl weicher Parameter, die mindestens einen Preis für einen Flug zwischen den mindestens zwei Abflug- und Zielorten umfassen, und mit Einrichtungen zur Erzeugung einer virtuellen Umgebung, die ein Abbild oder Modell einer realen Umgebung darstellt, und in welcher virtuelle Passagiere Flüge zu den jeweils durch die Parameter vorgegebenen Bedingungen buchen, wobei das System Einrichtungen zur Erfassung des zeitlichen Verlaufs der Gesamtheit aller Buchungen aufweist sowie mindestens zwei räumlich getrennte Benutzeroberflächen mit je einer Anzeigeeinrichtung und einer Eingabeeinrichtung, über weiche mindestens zwei Benutzer die jeweiligen Buchungszustände durch Änderung mindestens eines der weichen Parameter beeinflussen können, wobei das System weiterhin Einrichtungen zur Ermittlung und Ausgabe eines zu erwartenden Gewinns auf Basis eines jeweils aktuellen Buchungszustandes für von je einem der Benutzer betreuten Fluges bzw. der von je einem der Benutzer betreuten Mehrzahl oder Gesamtheit von Flügen aufweist.

14. System nach Anspruch 13 zur Durchführung eines Verfahrens nach einem der Ansprüche 1 bis 12, **dadurch gekennzeichnet, dass** die von einem Benutzer betreuten Flüge jeweils einer anderen Fluggesellschaft zugeordnet sind.

15. System nach Anspruch 13 zur Durchführung eines Verfahrens nach einem der Ansprüche 1 bis 12, **dadurch gekennzeichnet, dass** das System in Form eines auf einem PC implementierten Programms vorgesehen ist.
